# EUROPEAN PATENT SPECIFICATION

(11) **EP 1 375 107 B1**
(45) Date of publication and mention of the grant of the patent: **14.12.2005**
(21) Application number: 03014613.8
(22) Date of filing: 26.06.2003
(51) Int. Cl.: B29C 45/28, B29C 45/27

(54) **Nozzle tip for hot runners injection moulds**
Düsenspitze für Spritzgiesswerkzeuge mit Heisskanälen
Buse d'injection pour moules avec canaux chauffants

(30) Priority: 28.06.2002 JP 2002189859
(43) Date of publication of application: 02.01.2004
(73) Proprietor: A.K. TECHNICAL LABORATORY, INC.,, Hanishina-gun, Nagano-ken (JP)
(72) Inventor: Takeuchi, Setsuyuki, Hanishina-gun, Nagano-ken (JP); Ishikawa, Hiroshi, Hanishina-gun, Nagano-ken (JP)
(74) Representative: Parry, Simon James

(56) References cited:
- EP-A- 0 765 728
- US-A- 4 286 941
- PATENT ABSTRACTS OF JAPAN vol. 2002, no. 09, 4 September 2002 (2002-09-04) & JP 2002 154140 A (MITSUBISHI MATERIALS CORP), 28 May 2002 (2002-05-28)

## Description

### BACKGROUND OF THE INVENTION

### 1. Field of the Invention

The present invention relates to an injection mold having a hot-runner mold in which a needle nozzle is constantly nozzle-touched to the sprue of a cavity.

### 2. Description of the Prior Art

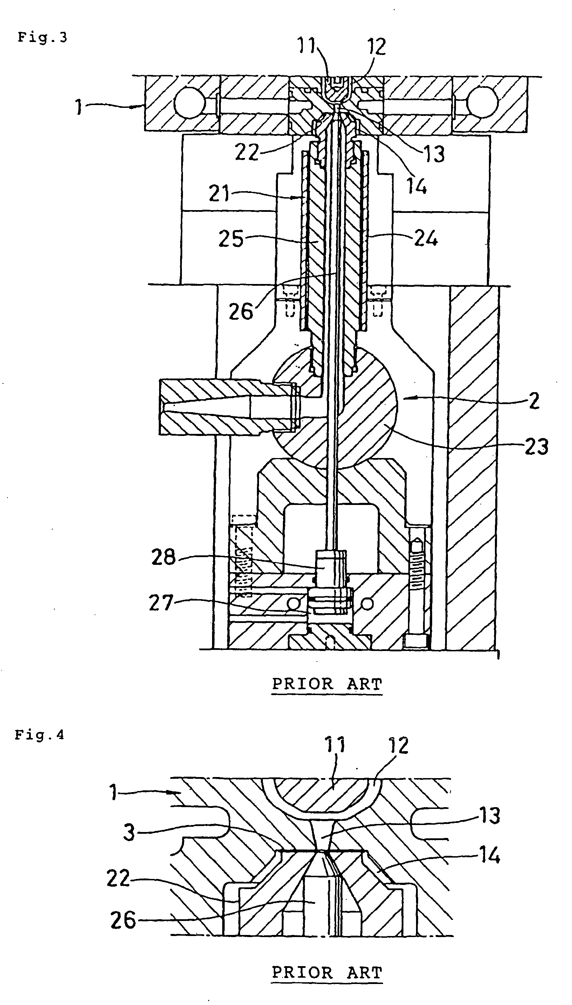

Fig. 3 shows one example of an injection mold having a conventional structure in which a hot-runner mold 2 is below a cavity mold 1 for molding a preform.

A cavity mold 1 has an internal injection core 11 and a sprue 13 of a cavity 12 formed around the injection core 11 in the bottom of 12. The gate of the sprue 13 is opened in the flat face of a concave 14 formed in the bottom of the cavity mold 1. A nozzle 22 of a needle-valve-nozzle 21 provided in the hot-runner mold 2 is inserted into the concave 14, whereby molten resin can be injected and filled into the cavity 12 from the hot-runner mold 2.

Although omitted in the drawings, usually, in the cavity mold 1, a plurality of cavities 12 are provided in parallel and in each of the cavities 12, the needle-valve-nozzle 21 is erected on a runner block 23 which is a laterally elongated cylinder. The needle-valve-nozzle 21 is constructed of a nozzle cylinder 25 having a band heater 24 on its outer periphery, the nozzle 22 mounted on the end of a nozzle cylinder 25 and having a flat end face, a needle 26 inserted through the runner block 23 until its end reaches a nozzle orifice, and a pneumatic or hydraulic cylinder 27 connected to a piston 28 at its bottom for opening or closing the nozzle 21. The needle-valve-nozzle 21 is opened or closed by moving up or down the piston 28.

The hot-runner mold 2 is constantly heated so as to keep the temperature of molten thermoplastic resin in a runner, whereas the cavity mold 1 is constantly cooled so as to rapidly solidify the molten resin which is injected and filled into the cavity mold 1. For this reason, if the nozzle 22 is directly nozzle-touched to the bottom of the cavity mold 1 in which the gate of the sprue 13 is formed, the peripheral portion of the gate of the sprue 13 is heated by the nozzle 22 to cause incomplete cooling and solidifying the resin in the sprue 13. Then, when a preform is released from the mold, the resin becomes stringy or leaks, or the bottom of the preform becomes whitened .

In order to prevent this phenomenon, as shown in Fig. 4, a method is used in which a heat insulating sheet 3 is sandwiched between the bottom of the cavity mold 1 and the end face of the nozzle 22, and consequently nozzle-touching is achieved indirectly via the heat insulating sheet 3. The heat insulating sheet 3 generally used is made of a polyamide plastic sheet having a thickness of about 0.5 mm and has heat resistance, but it needs to be periodically replaced because it has a short life. Moreover, variations are caused in the height of the nozzle by tolerance at machining or assembling the cavity mold and the hot-runner mold, so that it is necessary to adjust the height of the nozzle. The adjustment of the height of the nozzle causes the difficulties of measuring, disassembling, and further machining the nozzle.

JP200215410 discloses an injection mold apparatus having a hot runner. In this arrangement, a slidably mounted seal ring is made to contact a gate bush under the pressure of a thermal plastic resin when the molten resin passes through a material passage. The seal ring closes the clearance space in the region of a sprue gate in order to prevent the penetration of the molding material into said clearance space.

### SUMMARY OF THE INVENTION

The present invention has been made to solve the above drawbacks of the prior art. It is the object of the invention to provide a new injection mold having a hot-runner mold in which the end part of a nozzle is constructed of a tip having low thermal conductivity thereby to enable the nozzle to directly nozzle-touch a cavity mold without a heat insulating sheet and in which the relationship between the tip and a needle put in the tip eliminates the need for adjusting the height of the nozzle.

The present invention relates to an injection mold having a hot runner comprising: a cavity mold which has a gate of a sprue of a cavity in a concave formed in the bottom thereof, a peripheral portion of the gate being formed into a flat face, and a hot-runner which is provided with a needle-valve-nozzle having an end face formed into a flat face, the hot-runner mold being arranged on the cavity mold with the end of the needle-valve-nozzle inserted into the concave, wherein the nozzle includes: a nozzle body having an opening formed in the end face of the nozzle; and a short cylindrical tip that is formed of metal having lower thermal conductivity than the nozzle body and has a flat end face and a nozzle orifice in the center of the end face, the cylindrical tip being slidably fitted in an opening formed in the end face of the nozzle in such a way that its end face is protruded from the end face of the nozzle and directly nozzle-touched to the gate of the sprue of the cavity.

The cylindrical tip has an inner peripheral wall face extending to the nozzle orifice, the inner peripheral wall face being formed in a conical face having the same angle as a conical end portion of a needle mounted in the needle-valve-nozzle and being fitted on the end portion of the nozzle to close the nozzle orifice and to support the cylindrical tip.

Preferably, the nozzle body is made of steel for a mold and the tip is made of a titanium alloy having lower thermal conductivity than the steel for a mold.

### BRIEF DESCRIPTION OF THE DRAWINGS

Fig. 1 is a longitudinal cross-sectional view of the main part of an injection mold having a hot-runner mold in accordance with the present invention;
Fig. 2 a side view of a nozzle end portion of the injection mold shown in Fig. 1;
Fig. 3 is a longitudinal cross-sectional view of an injection mold having a hot-runner mold of a conventional structure in a prior art; and
Fig. 4 is a longitudinal cross-sectional view of a nozzle-touching portion of the injection mold in Fig. 3.

### DESCRIPTION OF THE PREFERRED EMBODIMENT

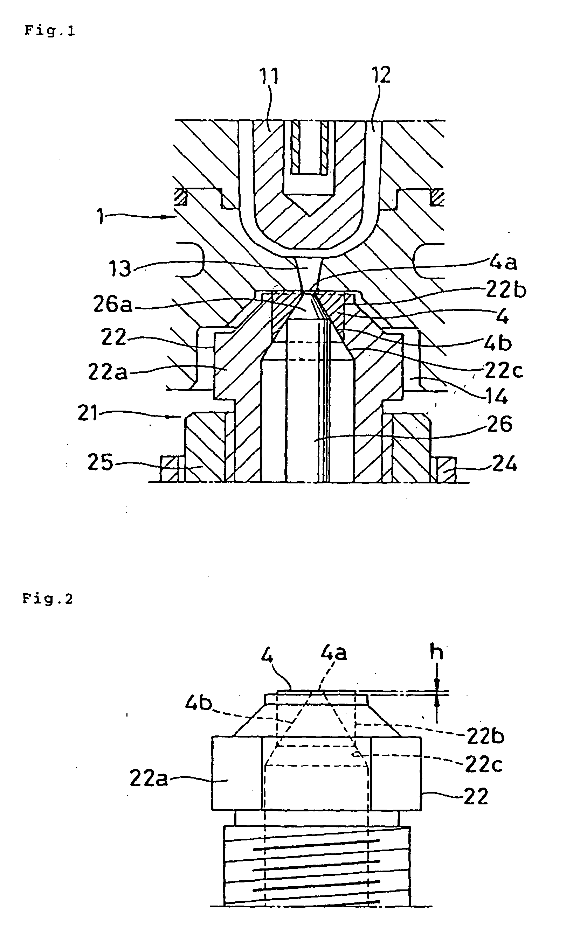

Fig. 1 and Fig. 2 show one embodiment of the main part of this invention and the parts having the same structures as shown in Fig. 3 and Fig. 4 are denoted by the same reference numerals.

The nozzle 22 of a needle-valve-nozzle 21 shown in the drawings is constructed of a nozzle body 22a having an opening 22b formed in its end face and a tip 4 which is fitted in the opening 22b and the flat end face of which is protruded from the end face of the nozzle body 22a by a height (h) larger than at least a thickness of a heat insulating sheet. This tip 4 is a cylindrical body made of metal such as titanium alloy having lower thermal conductivity than steel for a mold forming the nozzle body 22a. For example, the steel for a mold has a thermal conductivity of 0.073 cal/cm²/sec/°C/cm and titanium has a thermal conductivity of 0.041 cal/cm²/sec/°C/cm. With this level of difference in the thermal conductivity, it is possible to achieve the object of the invention.

A nozzle orifice 4a is made in the center of the end face of the tip 4, and an inner peripheral wall face 4b extending to the nozzle orifice 4a and the end inner peripheral wall face 22c of the nozzle body 22a are formed in a conical face having the same angle as a conical needle end portion 26a.

Moreover, the outside diameter of the tip 4 is made smaller than the inside diameter of the opening 22b by a fine sliding clearance. Thus, by this fine sliding clearance, the tip 4 is not fixed in the opening 22b but can be fitted on and supported by the needle end portion 26a.

In this kind of nozzle 22, the end portion 26a of a needle 26 is located at the center of the opening 22b and hence only by fitting the tip 4 into the opening 22b, the nozzle 22 can be directly nozzle-touched to the cavity mold 1, that is, as shown in Fig. 3, when a hot-runner mold 2 is set under a cavity mold 1 and the nozzle 22 is inserted into a concave 14 and then the needle 26 is moved up along with a piston 28 by the action of a cylinder 27, the flat end of the tip 4 is put into contact with the flat face around the gate of a sprue 13, whereby the nozzle 22 is directly nozzle-touched to the cavity mold 1.

At this time, the tip 4 is pressed and slid in the opening 22b by the needle 26 until it contacts the cavity mold 1. Thus, even if variations in height are caused between a plurality, of needle-valve-nozzles 21 mounted in the hot-runner mold 2 by tolerance in machining and assembling, the tips 4 are protruded from the end faces of the nozzle bodies 22a according to the variations thereby to eliminate the need for performing such a height adjustment as is required in the related art.

Further, even if the needle 26 is moved down and its end portion 26a is separated from the tip 4 at the time of injecting and filling molted resin, the inner peripheral wall face of the tip 4 is pressed by the injecting pressure of the resin and hence the nozzle-touching is maintained. In short, since the tip 4 alternately receives the pushing pressure and injecting pressure applied to the needle-26, it keeps the nozzle-touching. Thus, the tip 4 is only slidably fitted into the opening 22b of the nozzle body 22a, the nozzle-touching force can be kept and the resin leakage can be prevented.

Still further, an air gap is produced between the end face of the nozzle body 22a and the bottom face of the cavity mold 1 around the gate of a sprue 13 by the tip 4 protruded from the end face of the nozzle 22. This air gap and the low thermal conductivityof the tip 4 significantly reduce thermal conduction from the needle-valve-nozzle 21 to the cavity mold 1, thereby eliminating the need for providing the heat insulating sheet previously used.

In addition, the tip 4 made of the metal having the low thermal conductivity has excellent durability that can not be compared with the heat insulating sheet made of heat-resistant plastic, so it is not necessary to periodically replace the tip 4. Moreover, even if the metal having the low thermal conductivity is more expensive and harder to machine than a metal material usually used, it is only used as the tip 4 for a part of the nozzle 22 and the tip 4 is simplified in structure and can be easily machined. Therefore, this tip 4 produces also an economic effect.

In the present specification "comprises" means "includes or consists of" and "comprising" means "including or consisting of".

## Claims

1. An injection mold having a hot-runner, comprising: a cavity mold (1) which has a gate of a sprue (13) of a cavity (12) in a concave formed in a bottom thereof, a peripheral portion of the gate being formed into a flat face; and a hot-runner (2) which is provided with a needle-valve-nozzle (21) having an end face formed into a flat face, the hot-runner mold (1) being arranged on the cavity mold (1) with the end of the needle-valve-nozzle (21) inserted into the concave (14), wherein the nozzle includes: a nozzle body (22a) having an opening (22R) formed in the end face of the nozzle; and a short cylindrical tip (4) that has a flat end face and a nozzle orifice (4a) in the center of the end face, the cylindrical tip (4) being slidably fitted in the opening (22R) formed in the end face of the nozzle in such a way that its end face is protruded from the end face of the nozzle and directly nozzle-touched the gate of the sprue (13) of the cavity (12), **characterised in that** the short cylindrical tip (4) is formed of a metal having lower thermal conductivity than the nozzle body (22a), and wherein the cylindrical tip (4) has an inner peripheral wall face (22c) extending to the nozzle orifice (4a), the inner peripheral wall face (22c) being formed in a conical face having the same angle as the conical end portion of a needle (26) mounted in the needle-valve-nozzle (21) and being fitted on the end portion of the needle (26) to close the nozzle orifice (4a) and to support the cylindrical tip (4).

2. The injection mold having a hot-runner mold as claimed in claim 1, wherein the nozzle body is made of steel for a mold and the cylindrical tip is made of a titanium alloy having a lower thermal conductivity than the steel for a mold.

## Patentansprüche

1. Spritzgießwerkzeug mit einem Heißkanal, welches umfaßt: eine Hohlraumform (1), die einen Zugang eines Ausgusses (13) eines Hohlraums (12) in einer Austiefung, der in einem Boden derselben ausgebildet ist, aufweist, wobei ein Randabschnitt des Zugangs zu einer ebenen Fläche ausgebildet ist; und einen Heißkanal (2), der mit einer Nadelventildüse (21) versehen ist, die eine Endfläche aufweist, die zu einer ebenen Fläche ausgebildet ist, wobei der Heißkanal (2) auf der Hohlraumform (1) angeordnet ist, wobei das Ende der Nadelventildüse (21) in die Austiefung (14) eingeführt ist, wobei die Düse einschließt: einen Düsenkörper (22a) mit einer Öffnung (22R), die in der Endfläche der Düse ausgebildet ist; und eine kurze zylindrische Spitze (4), die eine ebene Endfläche und eine Düsenöffnung (4a) im Zentrum der Endfläche aufweist, wobei die zylindrische Spitze (4) gleitend in die Öffnung (22R) paßt, die in der Endfläche der Düse ausgebildet ist, in der Weise, daß ihre Endfläche aus der Endfläche der Düse hervorsteht und direkt in Düsenkontakt mit dem Zugang des Ausgusses (13) des Hohlraums (12) steht, **dadurch gekennzeichnet, daß** die kurze zylindrische Spitze (4) aus einem Metall mit niedrigerer Wärmeleitfähigkeit als der Düsenkörper (22a) hergestellt ist und daß die zylindrische Spitze (4) eine innere Umfangswandfläche (22c) aufweist, die sich bis zur Düsenöffnung (4a) erstreckt, wobei die innere Umfangswandfläche (22c) in einer konischen Fläche mit demselben Winkel wie der konische Endabschnitt einer Nadel (26) ausgebildet ist, der in der Nadelventildüse (21) angebracht ist und auf dem Endabschnitt der Nadel (26) sitzt, um die Düsenöffnung (4a) zu schließen und die zylindrische Spitze (4) zu halten.

2. Spritzgießwerkzeug mit einem Heißkanal nach Anspruchl, **dadurch gekennzeichnet, daß** der Düsenkörper aus Stahl für ein Werkzeug hergestellt ist und die zylindrische Spitze aus einer Titanlegierung mit einer niedrigeren Wärmeleitfähigkeit als der Stahl für ein Werkzeug hergestellt ist.

## Revendications

1. Moule à injection ayant un moule à canaux chauffés, comprenant : un moule à empreinte (1), qui a une entrée d'une carotte (13) de l'empreinte (12) dans une concavité formée au fond de ce dernier, une partie périphérique de l'entrée étant formée dans une face plate ; et un moule à canaux chauffés (2) qui est muni d'une buse d'injection à aiguille (21) ayant une face frontale formée dans une face plate, lequel moule à canaux chauffés (1) étant disposé sur l'empreinte (1) avec l'extrémité de la buse d'injection à aiguille (21) insérée dans la concavité (14), dans lequel la buse comprend : un corps de buse (22a) ayant une ouverture (22R) formée dans la face frontale de la buse ; et un court embout cylindrique (4) qui a une face frontale plate et un nez de buse (4a) au centre de la face frontale, lequel embout cylindrique (4) étant ajusté de façon coulissante dans l'ouverture (22R) formée dans la face frontale de la buse de telle manière que sa face frontale fait saillie à partir de la face frontale de la buse et touche directement par la buse l'entrée de la carotte (13) de l'empreinte (12), **caractérisé en ce que** le court embout cylindrique (4) est formé d'un métal ayant une conductivité thermique inférieure que le corps de buse (22a), et dans lequel l'embout cylindrique (4) a une face latérale périphérique intérieure (22c) s'étendant vers le nez de buse (4a), laquelle face latérale périphérique intérieure (22c) étant formée dans une face conique ayant le même angle que la partie d'extrémité conique d'une aiguille d'injection (26) montée dans la buse d'injection à aiguille (21) et étant ajustée sur la partie d'extrémité de l'aiguille d'injection (26) pour fermer le nez de buse (4a) et pour supporter l'embout cylindrique (4).

2. Moule à injection ayant un moule à canaux chauffés selon la revendication 1, dans lequel le corps de buse est constitué en acier pour un moule et l'embout cylindrique est en alliage de titane ayant une conductivité thermique inférieure à l'acier pour un moule.
